# EUROPÄISCHE PATENTSCHRIFT

(11) **EP 0 482 484 B1**
(45) Veröffentlichungstag und Bekanntmachung des Hinweises auf die Patenterteilung: **14.08.1996**
(21) Anmeldenummer: 91117603.0
(22) Anmeldetag: 16.10.1991
(51) Int. Cl.: G01S 17/58, G01B 21/26, G01P 3/36, H03K 21/00

(54) **Optisches Gerät zur Messung der Geschwindigkeit oder Länge einer bewegten Oberfläche mittels eines von einem Laser ausgehenden Messlichtstrahls**
Optical device for measuring the speed or the length of a moving surface using a measurement light beam emanating from a laser
Dispositif optique de mesure de la vitesse ou de la longueur d'une surface en mouvement employant un faisceau de lumière de mesure émis d'un laser

(30) Priorität: 26.10.1990 DE 9014815 U
(43) Veröffentlichungstag der Anmeldung: 29.04.1992
(73) Patentinhaber: Mesacon Gesellschaft für Messtechnik mbH, D-44227 Dortmund (DE)
(72) Erfinder: Kopka, Michael, W-4600 Dortmund (DE)
(74) Vertreter: Patentanwälte Wenzel & Kalkoff

(56) Entgegenhaltungen:
- FR-A- 2 141 583
- US-A- 4 257 003
- US-A- 4 669 098

## Beschreibung

Die Erfindung betrifft ein optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht dopplerverschobenes Laserlicht oder ein anderes doppler-verschobenes Laserlicht, zur Erzielung einer Schwebung überlagert werden, deren Frequenz ein Maß für die Geschwindigkeit der Oberfläche bildet und in Form fortlaufend anfallender digitaler Signale in einem Auswertsystem aufgenommen und ausgewertet, insbesondere in einem Zähler gezählt wird. Ein solches Gerät ist z.B. aus FR-A-2 141 583 bekannt.

Die Genauigkeit der Messung hängt u. a. von der Zählgenauigkeit ab, also davon, ob die anfallenden Signale fortlaufend verlustfrei gezählt und die Zählergebnisse ebenso fortlaufend an die dem Zählsystem nachgeschalteten Teile des Auswertsystems weitergeleitet werden.

Da die der Eingangsfrequenz Fₑᵢₙ entsprechenden Signale in einem Bereich hoher Meßfrequenzen anfallen, ist auch die Zählfrequenz entsprechend hoch und kann ohne weiteres 10 MHz erreichen. Falls das Zählsystem in TTL-Technik ausgeführt wird, ist der Einsatz einer Vielzahl von TTL-Bausteinen angesichts der hohen Zählfrequenz erforderlich, die einen unerwünscht hohen Platzbedarf beanspruchen. Auch andere Lösungen in diskreter Logik mit niedrigem Integrationsgrad scheiden als brauchbare Lösung angesichts der hohen Zählfrequenz aus.

Die Anwendung einer niedrigeren Meßfrequenz im Zählsystem kommt ebenfalls nicht in Betracht, weil das Ergebnis nicht der geforderten Zählgenauigkeit entsprechen kann.

Es besteht daher die Aufgabe, ein Zählsystem zu schaffen, das eine hohe Zählfrequenz aufweist und mit relativ einfachen Mitteln sowie insbesondere mit wenig Platzbedarf zu verwirklichen ist und dennoch über die geforderte Zählgenauigkeit verfügt.

Diese Aufgabe wird erfindungsgemäß dadurch gelöst, daß die der Eingangsfrequenz Fₑᵢₙ entsprechenden Signale mittels eines Frequenzteilers in Teilfrequenzen Fₜₑᵢₗ = Fₑᵢₙ x 1/n auf eine Anzahl von n synchronen Zählern aufteilbar ist, deren n Zählerstände mittels eines Addierwerkes fortlaufend als Ausgangsfrequenz Fₐᵤₛ = Σ Fₜₑᵢₗ₁ bis n auswertbar sind, die der Eingangsfrequenz Fₑᵢₙ entspricht.

Der entscheidende Vorteil des erfindunqsqemäßen Systems besteht darin, daß trotz der verlangten hohen Zählfrequenz standardisierte Zähler, insbesondere in LSI-Technik, verwendet werden können, die eine begrenzte obere Zählfrequenz aufweisen, also langsamer sind als z. B. 10 MHz, nämlich allenfalls 7 MHz Zählfrequenz erreichen. Die Verwendung dieser langsameren Zähler wird möglich durch eine Aufteilung der Eingangsfrequenz Fₑᵢₙ in eine entsprechende Anzahl von Teilfrequenzen Fₜₑᵢₗ, so daß die eingesetzten standardisierten Zähler jeweils eine niedrigere Meßfrequenz übernehmen, die grundsätzlich unter ihrer Zählfrequenz liegt. Die Zählerstände werden mittels eines insbesondere in Software ausführbaren Addierwerkes, also mit relativ geringem Aufwand, fortlaufend ausgewertet und addiert, so daß sich als Ergebnis die gewünschte Eingangsfrequenz Fein ergibt. Voraussetzung ist die Verwendung synchroner Zähler. Sofern bereits eine Aufteilung der Signale auf zwei Zähler ausreicht, kann als Frequenzteiler eine einfache Flipflop-Schaltung eingesetzt werden. Übersteigt die Anzahl n der notwendigen einfachen standardisierten Zähler die Zahl 2, so ist eine entsprechende Kontrollogik zur Steuerung des Frequenzteilsystems erforderlich.

Die erfindungsgemäße Lösung führt zu einem Zählsystem mit hoher Zählfrequenz, so daß die anfallenden Signale verlustfrei zahlbar sind. Die Zählfrequenz läßt sich durch Wahl einer entsprechenden Anzahl von n Zählern auch über z. B. 10 MHz hinaus ohne weiteres steigern. Der Platzbedarf der verwendbaren standardisierten Zähler ist außerordentlich gering. Ein in TTL-Technik ausgeführtes Zählsystem hat einen etwa zehnfachen Platzbedarf. Standardisierte bzw. fertige integrierte Zähler sind einfach zu benutzen, leicht an Mikroprozessoren anschließbar und weisen darüber hinaus den bereits erwähnten wichtigen Vorteil des geringen Platzbedarfs auf. Die Verwendung mehrerer synchroner Zähler bietet die Vorteile eines hoch integrierten Bauteils in Verbindung mit einer außerordentlich hohen Zählfrequenz. Die Aufteilung der der Eingangsfrequenz Fein entsprechenden Signale wird durch einfache, schnelle Schaltung, vorzugsweise in programmierbarer Logik, vorgenommen.

Die Aufteilung der Signale wird erfindungsgemäß zweckmäßig so vorgenommen, daß die positive und die negative Flanke jeder digitalen Signalschwingung der Eingangsfrequenz Fₑᵢₙ zur Erzeugung einer ersten und zweiten Teilfrequenz Fₜₑᵢₗ₁ und Fₜₑᵢₗ₂ dienen, die in gleicher Weise zur Bildung weiterer Teilfrequenzen Fₜₑᵢₗ bis zur Erreichung von n Teilfrequenzen aufteilbar sind.

Nachfolgend werden Ausführungsbeispiele der Erfindung mit Bezug auf die Zeichnung näher erläutert. In der Zeichnung zeigen:
- Fig. 1: eine vereinfachte Darstellung einer elektrischen bzw. elektronischen Schaltung eines Zählsystems;
- Fig. 2: eine schematische Darstellung der Aufteilung einer Eingangs frequenz Fₑᵢₙ auf zwei Teilfrequenzen Fₜₑᵢₗ;
- Fig. 3: eine schematische Darstellung des Aufteilsystems.

Die der Eingangs frequenz Fₑᵢₙ entsprechenden Signale gelangen über eine Leitung 1 in einen Informationsteiler I, der im vorliegenden Fall als Frequenzteiler 2 in Form einer Flipflop-Schaltung ausgeführt ist. Den ersten Ausgang des Frequenzteilers 2 verlassen die Signale mit einer Teilfrequenz Fₜₑᵢₗ₁, die im vorliegenden Fall Fₑᵢₙ/2 beträgt, und gelangen über die Leitung 3 zu einem standardisierten Zähler 5, wo sie gezählt werden. Entsprechend gibt der zweite Ausgang des Frequenzteilers Signale ab, deren Teilfrequenz Fₜₑᵢₗ₂ der Frequenz Fₑᵢₙ/2 entspricht und die über eine Leitung 4 in einen zweiten standardisierten synchronen Zähler 6 gelangen, wo sie ebenfalls gezählt werden. Die Zählerstände der beiden Zähler 5, 6 werden von einem Addierwerk 9 über die Leitungen 7, 8 fortlaufend ausgewertet, so daß sich im Ergebnis die Eingangsfrequenz Fₑᵢₙ fortlaufend ergibt.

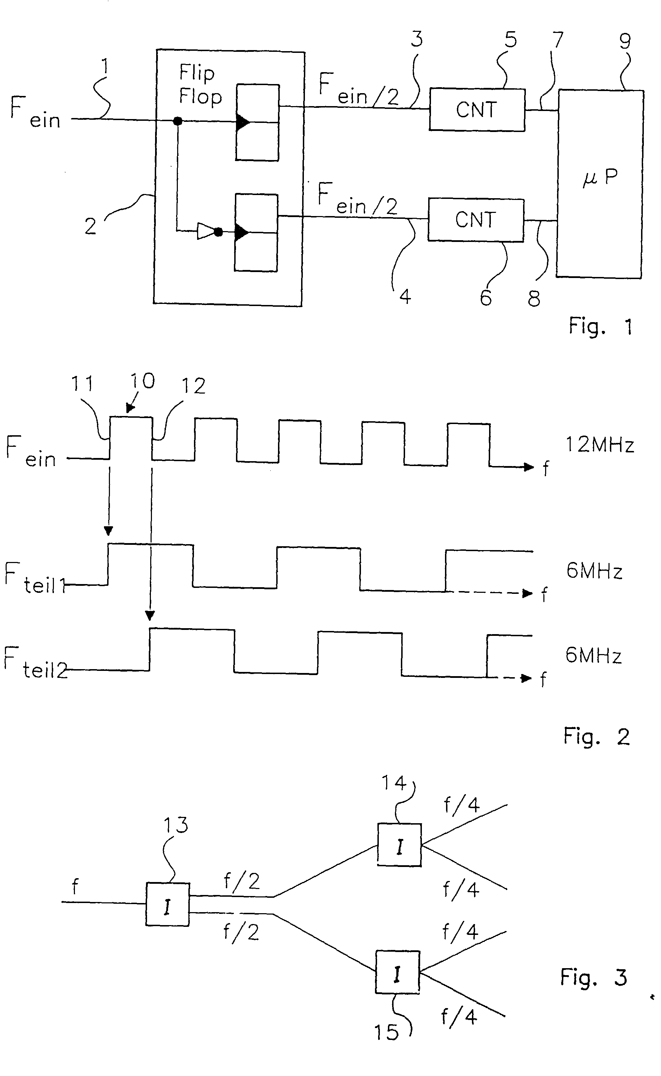

In Fig. 2 ist dargestellt, wie die Aufteilung der Eingangsfrequenz Fₑᵢₙ in entsprechende Teil frequenzen Fₜₑᵢₗ erfolgt. Die positive Flanke 11 jeder Signalschwingung 10 der Eingangs frequenz Fₑᵢₙ wird zur Bildung einer Zwischenfrequenz bzw. Teilfrequenz Fₜₑᵢₗ₁ benutzt. Die negativen Flanken 12 jeder Signalschwingung 10 dienen zur Bildung einer weiteren Teilfrequenz Fₜₑᵢₗ₂. Auf diese Weise wird im konkreten Fall eine Eingangs frequenz Fₑᵢₙ von 12 MHz auf zwei Teilfrequenzen Fₜₑᵢₗ₁ und Fₜₑᵢₗ₂ von jeweils 6 MHz aufgeteilt, wie der Darstellung von Fig. 2 zu entnehmen ist. Falls eine noch höhere Auflösung erforderlich ist, kann die Aufteilung in der gleichen Weise fortgesetzt werden, so daß die Eingangs frequenz Fₑᵢₙ schließlich in eine Anzahl von n Teilfrequenzen aufgeteilt ist.

Im konkreten Fall, wenn die Meßfrequenz im Bereich von 10 MHz liegt, ist eine einfache Teilung ausreichend, also eine Aufteilung auf zwei Zähler 5, 6, wie in der Schaltung gemäß Fig. 1 dargestellt ist, wobei jeder Zähler z. B. eine begrenzte obere Zählfrequenz von 7,5 MHz haben kann, was im allgemeinen als obere Grenze synchroner standardisierter Zähler als Peripheriebaustein zu Mikroprozessorsystemen gilt. Als Zählwerk 9 wird im Ausführungsbeispiel ein Mikroprozessor eingesetzt, der nur geringen Aufwand erfordert.

Fig. 3 verdeutlicht noch einmal schematisch den Verlauf der dem erfindungsgemäßen Zählsystem zugrundeliegenden Aufteilung einer Frequenz f durch einen Informationsteiler 13, der zwei Teilfrequenzen f/2 erzeugt, die wiederum in nachgeschalteten weiteren Informationsteilern 14, 15 erneut in weitere Teilfrequenzen f/4 aufgeteilt werden. Dieses System ist praktisch beliebig zu erweitern, je nachdem welche Frequenzuntersetzung gefordert wird.

Mit dieser Erfindung wird praktisch eine Erweiterung des Eingangsfrequenzbereichs eines einfachen standardisierten Zählers erreicht, ohne daß jedoch die Zählgenauigkeit beeinträchtigt wird.

## Patentansprüche

1. Optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht doppler-verschobenes Laserlicht oder ein anderes doppler-verschobenes Laserlicht, zur Erzielung einer Schwebung überlagert werden, deren Frequenz ein Maß für die Geschwindigkeit der Oberfläche bildet und in Form fortlaufend anfallender digitaler Signale in einem Auswertsystem aufgenommen und ausgewertet, insbesondere in einem Zähler gezählt wird, dadurch **gekennzeichnet**, daß die der Eingangsfrequenz Fₑᵢₙ entsprechenden Signale mittels eines Frequenzteilers (2) in Teilfrequenzen Fₜₑᵢₗ = Fₑᵢₙ x 1/n auf eine Anzahl n synchroner Zähler (5, 6) aufteilbar ist, deren n Zählerstände mittels eines Addierwerkes (9) fortlaufend als Ausgangsfrequenz Fₐᵤₛ = Σ F_{teil1 bis n} auswertbar sind, die der Eingangsfrequenz Fₑᵢₙ entspricht.

2. Optisches Gerät nach Anspruch 1, dadurch **gekennzeichnet**, daß die positive und die negative Flanke (11) bzw. (12) jeder Signalschwingung (10) der Eingangsfrequenz Fₑᵢₙ zur Erzeugung einer ersten und zweiten Teilfrequenz Fₜₑᵢₗ₁ und Fₜₑᵢₗ₂ dienen, die in gleicher Weise zur Bildung weiterer Teilfrequenzen bis zur Erreichung von n Teilfrequenzen aufteilbar sind.

## Claims

1. Optical instrument for measuring the speed or length of a moving surface, in which a measuring light beam from a laser is directed onto the surface and the Doppler-shifted stray light reflected by the surface and other light, e. g. non-Doppler-shifted laser light or some other Doppler-shifted laser light are superimposed for obtaining a beat, whose frequency forms a measure for the speed for the surface and is received and evaluated in an evaluation system in the form of continuousy occuring digital signals, especially counted in a counter, characterized in that the signals corresponding to the input frequency Fₑᵢₙ are divided up by means of a frequency divider ( 2) into partial frequencies Fₜₑᵢₗ = Fₑᵢₙ x 1/n on a plurality of n synchronous counters (5,6) whose n counting readings are continuously evaluated by means of an adder (9) as an output frequency Fₐᵤₛ=ΣF_{teil1 to n'} which corresponds to the input frequency Fₑᵢₙ.

2. Optical instrument according to claim 1, characterized in that the positive and negative flanks (11 or 12) of each signal amplitude (10) of the input frequency Fₑᵢₙ are used for producing a first and a second partial frequency Fₜₑᵢₗ₁ and Fₜₑᵢₗ₂, which can be subdivided in the same way for forming further partial frequencies until n partial frequencies are reached.

## Revendications

1. Appareil optique pour la mesure de la vitesse ou de la longueur d'une surface en mouvement, un rayon lumineux de mesure émis par un laser étant dirigé sur la surface et la lumière diffusée déplacée par effet Doppler, réfléchie par la surface, et de l'autre lumière, par exemple de la lumière laser qui n'est pas déplacée par effet Doppler ou une autre lumière laser déplacée par effet Doppler étant superposées pour obtenir un battement dont la fréquence constitue une mesure pour la vitesse de la surface et est captée et exploitée dans un système d'exploitation sous forme de signaux numériques produits en continu, en particulier est comptée dans un compteur, caractérisé en ce que les signaux qui correspondent à la fréquence d'entrée Fₑᵢₙ peuvent être répartis au moyen d'un diviseur de fréquence (2) en fréquences partielles Fₜₑᵢₗ = Fₑᵢₙ x 1/n sur un nombre n de compteurs synchrones (5, 6), dont n niveaux de compteur peuvent être exploités au moyen d'un organe addeur (9) en continu comme fréquence de sortie Fₐᵤₛ = Σ F_{teil1 jusque n} qui correspond à la fréquence d'entrée Fₑᵢₙ

2. Appareil optique selon la revendication 1, caractérisé en ce que le flanc positif et le flanc négatif (11) et (12) de chaque oscillation de signal (10) de la fréquence d'entrée Fₑᵢₙ servent à produire une première et une seconde fréquence partielle Fₜₑᵢₗ₁ et Fₜₑᵢₗ₂ qui peuvent être divisées de la même manière pour former d'autres fréquences partielles jusqu'à obtenir n fréquences partielles.
